# Europäisches Patentamt
# European Patent Office
## Office européen des brevets

(19)

(11) Publication number: **0 107 754**
**B1**

(12) **EUROPEAN PATENT SPECIFICATION**

(45) Date of publication of patent specification: **08.06.88**

(51) Int. Cl.⁴: **G 11 B 13/04**, G 11 B 11/10

(21) Application number: **83107206.1**

(22) Date of filing: **22.07.83**

(54) Apparatus for magneto-optical information storage.

(30) Priority: **07.09.82 JP 156142/82**

(43) Date of publication of application:
**09.05.84 Bulletin 84/19**

(45) Publication of the grant of the patent:
**08.06.88 Bulletin 88/23**

(84) Designated Contracting States:
**DE FR GB**

(56) References cited:
US-A-4 005 259
US-A-4 190 775

Patent Abstracts of Japan Vol. 5, no. 91, 13
June 1981 & JP-A-56-36185

Patent Abstracts of Japan Vol. 5, no. 64, 30
April 1981 & JP-A-56-16950

Patent Abstracts of Japan Vol. 5, no. 165, 22
October 1981 & JP-A-56-94530

(73) Proprietor: **HITACHI, LTD.**
**6, Kanda Surugadai 4-chome Chiyoda-ku**
**Tokyo 100 (JP)**

(72) Inventor: **Ojima, Masahiro**
**6-13-8, Higashi-koigakubo**
**Kokubunji-shi Tokyo (JP)**
Inventor: **Niihara, Toshio**
**4-14-6, Nishi-koigakubo**
**Kokubunji-shi Tokyo (JP)**
Inventor: **Fujiwara, Hideo**
**1272-50-118, Shimotomi**
**Tokorozawa-shi Saitama-ken (JP)**

(74) Representative: **Patentanwälte Beetz sen. -
Beetz jun. Timpe - Siegfried - Schmitt-Fumian
Steinsdorfstrasse 10
D-8000 München 22 (DE)**

## Description

### Background of the invention

The present invention relates to an optical information storage apparatus according to the preamble of claim 1.

Such an optical information storage apparatus is known from patent abstract of Japan, Vol. 5, No. 91, June 13, 1981 referring to JP—A—5636185.

As an erasable apparatus for optical information storage, there has been known a magnetooptical disk memory which uses a perpendicularly magnetizable film as a storage medium, and in which the storage medium is irradiated with a focused laser beam so as to invert the direction of magnetization thereof by absorbing the photon energy of the laser beam, thereby to record and erase information, while the rotation of the polarization plane of light reflected from the storage medium is detected, thereby to reproduce information (Y. TOGAMI et al, "Amorphous thin film disk for magneto-optical memory" SPIE Vol. 329 Optical Disk Technology (1982) pp. 208—214). With the magnetooptical storage apparatus of this type, the rotary power of the magnetizable film for the polarization plane is very low, for example, below 1° in terms of angle. This leads to the serious problem that the S/N (signal-to-noise) ratio of a reproduced signal is too small to realize high-speed readout.

On the other hand, as an optical disk memory of good S/N ratio, there has been known an optical disk memory of the type which is used only for reproduction or the type which is capable of recording and reproduction but is incapable of erasure and rerecording. The reproduction in the optical disk memory of this type is based on detecting the magnitude of the intensity of reflected light from a disk. In case of employing a semiconductor laser as a light source, it is also possible to reproduce information by exploiting the so-called self-coupling effect which is a phenomenon wherein, when the reflected light from the disk is returned to the semiconductor laser, the optical output of the laser changes depending upon the magnitude of the intensity of the reflected light. Moreover, the use of the semiconductor laser as the light source is very advantageous for rendering the apparatus small in size and light in weight and lowering the cost thereof.

An example of such information reproducing apparatus which utilizes the self-coupling effect of the semiconductor laser is disclosed in Japanese Laid-open Patent Application No. 51-126846. In this apparatus, the magnitude of the intensity of the reflected light from the disk is converted into the magnitude of the backward emergent light of the semiconductor laser. Therefore, information are reproduced by a photodetector which is disposed in the rear of the laser. In this case, the polarization of the frontward emergent light of the laser is the TE (Transverse Electric) polarization parallel to the plane of a p-n junction, and also the polarization of the reflected light from the disk as well as the backward emergent light of the laser is the TE polarization. The apparatus merely reads the information once recorded, and cannot erase the information and record new information.

There have recently been proposed apparatuses which read information from a magnetooptic recording medium being an erasable storage medium by the use of the self-coupling effect. However, the rotation of a polarization plane by the magnetization of the magnetic film is slight, and a satisfactory S/N ratio of a reproduced signal has not been attained.

For example, the official gazette of Japanese Laid-open Patent Application No. 56-94530 discloses a reproducing apparatus wherein a double refractive material such as λ/4 plate is disposed in an optical path along which reflected light from the magnetooptic storage medium returns to a semiconductor laser, and wherein an angle defined between the optical axis of the λ/4 and the polarization plane of irradiating laser light is selected so that the oscillation mode of the semiconductor laser may change between a single oscillation mode and a multiple oscillation mode, depending upon the state of the magnetization of the storage medium.

In this regard, however, whether the semiconductor laser fed back with the reflected light effects the single mode oscillation or the multimode oscillation depends upon the quantity of the reflected light, the distance from the laser to the point of reflection, the temperature of the laser and the driving current of the laser, and it is particularly susceptible to changes in the distance between the laser and the medium. Accordingly, it is next to impossible to detect the sense of the magnetization on the basis of the change of the oscillation modes.

In addition, the official gazette of Japanese Laid-open Patent Application No. 56-16950 discloses a reproducing apparatus wherein a Faraday rotation device is disposed in an optical path along which reflected light from the magnetooptic storage medium returns to a semiconductor laser. This apparatus exploits the phenomenon that the optical output intensity of the semiconductor laser changes sinusoidally, depending upon the rotation of the polarization plane of the reflected light fed back. In this case, likewise to the case of Japanese Laid-open Patent Application No. 51-126846 described before, the polarization of the frontward emergent light of the laser (irradiating beam) is the TE polarization, and also the polarization of the reflected light from the storage medium, as well as the backward emergent light of the laser (reproducing beam) is the TE polarization. That is, the oscillating polarization direction of the semiconductor laser does not change.

Moreover, since the rotational angle of the polarization plane by the magnetooptical storage medium is as small as below 1 degree, that variation of the optical output of the laser which corresponds to the change of the sense of the magnetization of the backward emergent light of the laser is slight. Accordingly, the S/N ratio of a reproduced signal is very low.

In the optical information storage apparatus known from JP—A—56-36185 information is recorded as magnetic change on the recording track of an information recording carrier provided with a thin film of gadolinium cobalt. The polarization angle of reflected laser light changes in accordance with the recorded information. The change in the polarization angle of the reflected laser light is picked out through a polarized beam splitter, light detectors and a differential amplifier by a magnetic force effect so that a recorded information is picked out in terms of the change in the polarization angle of the reflected light. The change in the polarization angle is converted into an electric signal.

Summary of the invention

The present invention has been made in view of the circumstances described above, and has for its object to eliminate the problems in the prior-art optical information storage apparatuses as stated above and to provide an optical information storage apparatus which can reproduce information at a high S/N ratio from a magnetically anisotropic storage medium being an erasable information storage medium.

The above object is solved by the features of claim 1. The subclaims 2 to 8 characterize advantageous developments thereof.

Brief description of the drawings

Figure 1, Figures 2(A)—2(C) and Figure 3 are diagrams for explaining the principle of the present invention; in which Figure 1 shows the principle setup of the invention, Figures 2(A)—2(C) show the variations of laser oscillation light outputs versus laser driving currents, and Figure 3 shows the dependencies of the light intensities of the TE polarization and the TM polarization upon the rotation angle of the polarizer ($\theta_p$); and

Figure 4, Figure 5 and Figure 6 are diagrams each showing an embodiment of the present invention.

Description of the preferred embodiments

First, the principle on which the present invention is based will be described.

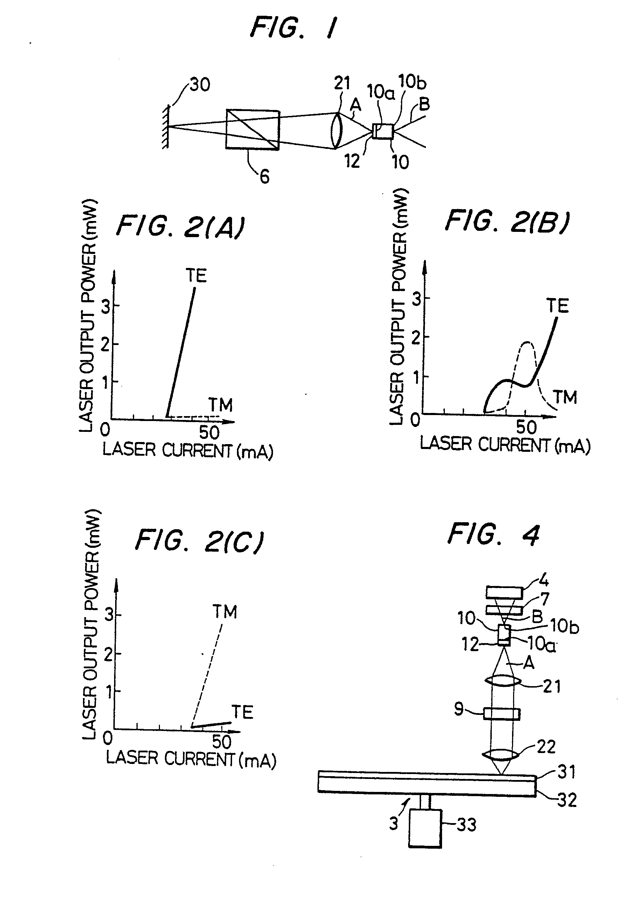

Figure 1 is a schematic view for elucidating the principle of the present invention. The illustrated setup indicates that the polarization direction of a semiconductor laser is changed by the polarizing characteristic of an external optical system. One facet 10a of a semiconductor laser 10 having a buried heterostructure is provided with an antireflection coating 12, a linear polarizer 6 is inserted between a coupling lens 21 and an external mirror 30, and the linear polarizer 6 is rotated, whereby the polarization direction of reflected light returning to the semiconductor laser 10 is changed so as to change the polarizing characteristic of the external optical system.

More specifically, a frontward laser beam A emergent from the facet 10a of the semiconductor laser 10 is projected on the mirror 30 through the coupling lens 21 and the linear polarizer 6, and the reflected light from the reflector 30 is sent back to the emergent facet 10a through the linear polarizer 6 and the coupling lens 21 again. At this time, the semiconductor laser 10 and the external mirror 30 constitute and external resonator, the polarizing characteristic of which is changed by rotating the linear polarizer 6.

Here, the provision of the antireflection coating 12 on the facet 10a of the semiconductor laser 10 is intended to weaken the linear polarization selectivity of the semiconductor laser device itself in the TE polarization direction and to render the laser device sensitive to the polarizing characteristic of the external resonator.

In the setup of Figure 1, the laser driving current-dependencies of the TE polarization component and TM (Transverse Magnetic) polarization component, the polarization plane of which differs by 90° from that of the TE polarization, of a backward laser beam B emergent from the facet 10b of the semiconductor laser 10 become as illustrated in Figures 2(A)—2(C), depending upon the inclination of the polarization transmitting plane of the linear polarizer 6. In each of the graphs of these figures, the axis of ordinates represents the optical output and the axis of abscissas the driving current, and a solid line indicates the TE polarization component and a broken line the TM polarization component. Figure 2(A) illustrates a case where the polarization transmitting plane of the linear polarizer 6 is in agreement with the TE polarization plane. At this time, the backward emergent light of the laser is naturally oscillating as the TE polarization. Figure 2(C) illustrates a case where the polarizer 6 is rotated 90° so as to transmit only the TM polarization. At this time, the laser is oscillating as the TM polarization. Figure 2(B) illustrates a case where the polarizer 6 is rotated a predetermined angle, for example, 67.5° with respect to the TE polarization plane. This case establishes the situation in which, depending upon the laser driving current, the TE polarization increases or the TM polarization increases. It is understood from Figures 2(A)—2(C) that the polarization state of the semiconductor laser can be controlled by rotating the linear polarizer 6.

An apparatus for polarization modulation exploiting this phenomenon is proposed in the official gazette of Japanese Laid-open Utility Model Registration Application No. 56-2265. This polarization modulator is such that the linear polarizer is mechanically rotated by an electromagnetic rotator so as to rotate the polarization plane to-be-transmitted thereof, whereby the polarization state of the backward laser oscillation beam is changed from the TE polarization to the TM polarization, or vice versa.

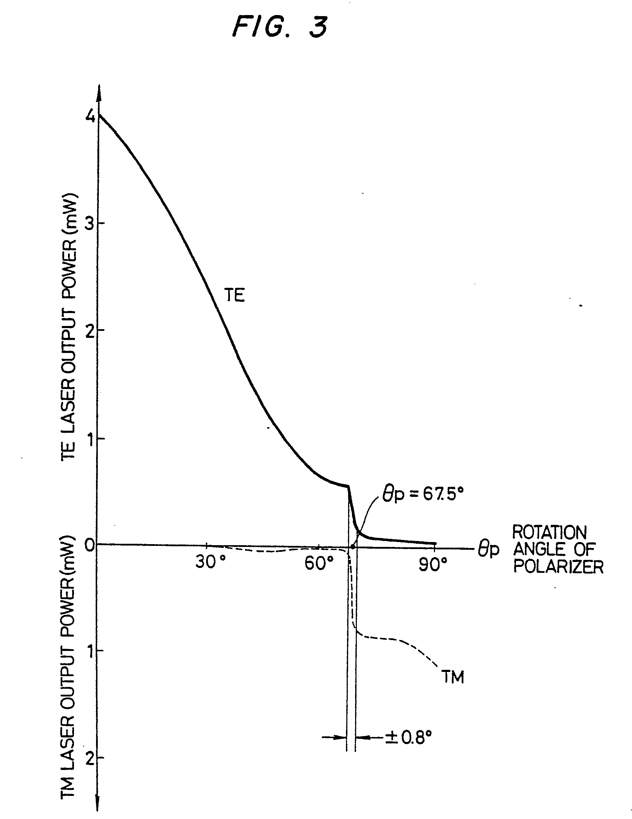

Figure 3 illustrates the dependencies of the light intensities of the TE polarization and TM polarization upon the rotation angle of the polarizer ($\theta_p$) in

the case where the laser driving current is fixed at a constant value. These characteristics have been measured in such a way that, in the setup of Figure 1, the backward emergent light B of the semiconductor laser 10 is condensed by a coupling lens, whereupon light passing through an analyzer (linear polarizer), the polarization transmitting plane of which is set to be parallel or vertical to the junction plane of the semiconductor laser 10, is received by a photodetector. As apparent from the figure, the oscillating polarization direction changes by nearly 90° from the TE mode to the TM mode in a very narrow angular range in the vicinity of $\theta_p=67.5°$, in other words, the intensity of the TM polarization increases from about 0 to about 1 mW on the basis of the rotation of the polarizer over ±0.8°.

The present invention applies this phenomenon to the reproduction of information from a magnetooptical storage medium so as to perform the information reproduction at a high S/N ratio.

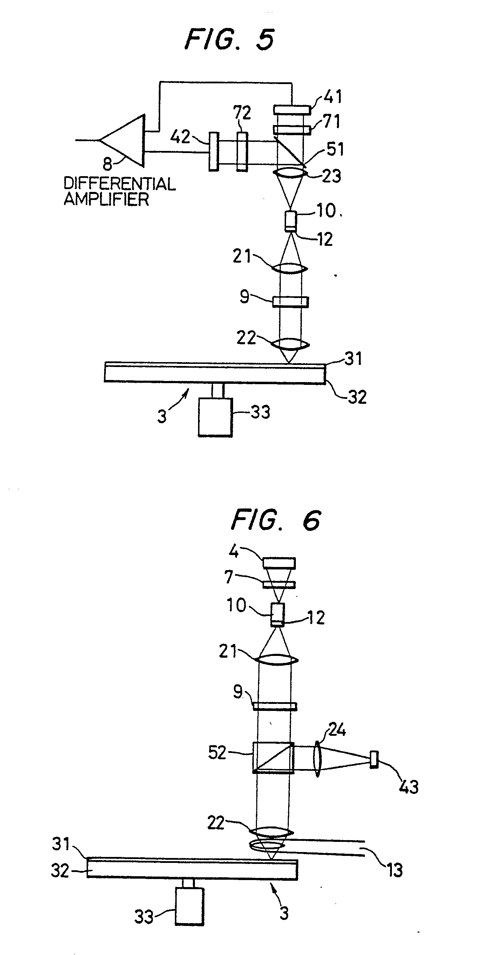

Now, embodiments of the present invention will be described. Figure 4 is a diagram showing an example of the reproducing system of a magnetooptical disk memory according to the present invention. Referring to the figure, numeral 3 designates a magnetooptical disk (hereinbelow, simply termed "disk") which consists of a disk substrate 32 and a layer of magnetically anisotropic medium 31 disposed on the substrate 32. The recording and erasure of information are carried out in such a way that a magnetic field is applied perpendicularly to the magnetically anisotropic medium layer 31 of the disk 3, to form residual magnetization in the thickness direction of the disk, and that a laser beam is condensed to heat a part irradiated therewith, the part being subsequently cooled, whereby the direction of the magnetization of the irradiated part is inverted. Thus, an information signal is written into the magnetically anisotropic medium 31 owing to the difference in the thickness (perpendicular) magnetization direction. As such magnetically anisotropic media, various ones have been known, and GdCo, TbFe, MnBi etc. can be effectively used.

Frontward emergent light A from one facet 10a of a semiconductor laser 10 having a buried heterostructure is collimated by a coupling lens 21, and the collimated beam is condensed by an objective 22 onto the magnetically anisotropic medium layer 31 of the disk 3 which is rotated by a motor 33. The light having fallen on the disk 3 has its polarization plane rotated slightly rightwards or leftwards, depending upon whether the magnetization direction of the magnetically anisotropic medium layer 31 is upward or downward. Thereafter, it is reflected. The reflected light returns along the same optical path as that of the projected light, to be fed back to the emergent facet 10a of the laser 10. In the apparatus of the present embodiment, a Faraday rotator (hereinbelow, simply termed "rotator") 9 is inserted between the two lenses 21 and 22, and the facet 10a of the laser 10 is provided with an antireflection coating 12. Usable as the rotator 9 is a device which changes an external magnetic field intensity, a device of optically-transparent ferromagnetic material the polarization rotating angle of which is adjusted by the thickness of the device, or the like. The use of the optically-transparent ferromagnetic material is desirable in such points that the material can render the apparatus small in size and light in weight and that it is of low loss. There are various optically-transparent ferromagnetic materials, among which $Y_3Fe_5O_{12}$ (YIG), $Gd_2BiFe_5O_{12}$ etc. can be effectively used. Here, a sheet of YIG having a thickness of 0.5 mm (which corresponds to a polarization rotation angle $\theta_F=34°$ to be described later) and a transmission factor of 0.22 is employed for the wavelength 0.8 µm of the semiconductor laser 10. Usable as the antireflection coating 12 is, for example, $SiO_2$ which is deposited to a thickness of $\frac{1}{4}$ of the wavelength of the semiconductor laser 10 by sputtering or·the like.

A backward emergent laser beam B from a facet 10b has only a polarization component in a specified direction taken out by an analyzer (linear polarizer in the present embodiment) 7, and the polarization component is led to a photodetector 4. In accordance with the thickness thereof, the rotator 9 has its polarization rotation angle $\theta_F$ set at approximately $\frac{1}{2}$ of the central angle of the region in which the oscillating polarization direction of the semiconductor laser 10 changes from the TE mode to the TM mode. Thus, the light to enter the disk 3 is linearly polarized in the direction rotated $\theta_F$ from the TE direction, while the light to be reflected from the disk 3 is linearly polarized in the direction of $\theta_F\pm\Delta\theta$ (where $\Delta\theta>0$), depending upon the sense of the magnetization of the magnetically anisotropic medium layer 31. When the reflected light passes through the rotator 9 to enter the facet of the laser 10 again, the polarization direction becomes $2\,\theta_F\pm\Delta\theta$. In accordance with the foregoing principle, the TM polarization oscillation takes place when the polarization of $2\,\theta_F+\Delta\theta$ has returned to the laser, while the TE polarization oscillation takes place when the polarization of $2\,\theta_F-\Delta\theta$ has returned. Accordingly, the slight rotation $\Delta\theta$ of the polarization plane by the magnetization of the magnetically anisotropic medium layer 31 rotates the polarization plane of the laser oscillation beam of the semiconductor laser 10 nearly 90°. When the polarization transmitting plane of the analyzer 7 is set at the direction vertical to the junction plane of the laser device 10 so as to pass only the TM polarization, signal light of about 1 mW enters the photodetector 4 as stated before, and the signal level rises, at least, two order or so when compared with that of the prior-art system. It is, of course, possible to set the polarization transmitting plane of the analyzer 7 at the direction parallel to the junction plane of the laser device 10 so as to pass only the TE polarization.

In the above, there has been described the case where the TE mode is perfectly changed to the TM mode by $\Delta\theta$. The invention, however, is also applicable to a case where the TE mode is not perfectly changed to the TM mode by rotating the polarization plane of the backward emergent light by Δθ. Even in this case, a satisfactory S/N ratio can be ensured.

Figure 5 shows another embodiment of the present invention. The apparatus of this embodiment is so constructed that a backward emergent laser beam is split in two by a semitransparent mirror 51, that analyzers 71 and 72 are used, one of which has its polarization transmitting plane set parallel to the junction plane of a laser device 10 so as to take out the TE polarization and the other of which has its polarization transmitting plane set vertical thereto so as to take out the TM polarization, and that the TE and TM polarizations are respectively introduced into photodetectors 41 and 42, the outputs of which are differentially amplified by a differential amplifier 8. With the apparatus of the present embodiment, accordingly, the signal level is doubled, and simultaneously, noise such as laser noise and disk surface noise are cancelled, whereby the S/N ratio can be enhanced more. Needless to say, the semitransparent mirror 51 and the analyzers 71, 72 may well be replaced with a polarization prism which transmits the TE polarization and which reflects the TM polarization.

Figure 6 shows still another embodiment of the present invention, in which a focusing deviation and tracking deviation-detecting optical system is built besides the setup for the recording and erasing functions. The recording and erasure of information in a magnetooptical storage medium are executed by the thermomagnetic recording and erasing process wherein a light spot is projected under an external magnetic field perpendicular to the storage medium, and a coil 13 is disposed therefor. The coil 13 is interposed between an objective 22 and the disk 3 in a manner to surround a laser beam, and is supplied with current from a power source, not shown, to afford the magnetic field perpendicular to the disk 3.

Numeral 43 designates a photodetector for detecting a focusing deviation and a tracking deviation, numeral 52 a beam splitter such as semitransparent prism which splits reflected light from the disk in two so as to lead one of them to the photodetector 43, and numeral 24 a cylindrical lens which serves to detect the focusing deviation. These parts constitute the focusing deviation and tracking deviation-detecting optical system. As this optical system, any of techniques known in unerasable optical disk memory devices such as an optical video disk and an optical audio disk can be used without any change.

In the foregoing three embodiments, the sheet of YIG is used as the rotator 9, and its thickness is set at 0.5 mm so that the polarization rotating angle $\theta_F$ thereof may become 34°C for the case where the transition from the TE polarization to the TM polarization takes place at the polarizer rotation angle $\theta_p = 67.5°$. In order to attain the same polarization rotating angle by the use of a sheet of $Gd_2BiFe_5O_{12}$, the thickness of the sheet becomes 0.043 mm. The transmission factor in this case becomes 0.68.

The polarization rotating angle at which the oscillating polarization direction of the semiconductor laser differs depending upon the structure of a semiconductor laser to be used, and it ought not to be restricted to that in the embodiments.

As set forth above, according to the present invention, the slight rotation of a polarization plane by the magnetization of a storage medium can be amplified to the rotation of the polarization plane of a semiconductor laser nearly equal to 90°. This brings forth the remarkable effect that an optical information reproducing apparatus which can reproduce information from a magnetooptical disk at a high S/N ratio can be realized.

**Claims**

1. An optical information storage apparatus having a semiconductor laser (10) which irradiates a perpendicularly magnetizable storage medium (31) with a first, frontward emergent laser beam (A), the storage medium (31) comprising information being recorded owing to a change of magnetization, and which semiconductor laser is self-coupled by reflected light from the storage medium, a Faraday rotator (9) which is arranged in an optical path along which the reflected light from said storage medium (31) returns to said semiconductor laser, photodetection means (4) to receive a second, backward laser beam of said self-coupled semiconductor laser and to convert it into an an electrical signal, and an analyzer (7) which is interposed between said semiconductor laser (10) and said photodetection means (4); characterized in that said semiconductor laser (10) is a buried-heterostructure semiconductor laser in which a facet (10a) emitting the first laser beam is provided with an antireflection coating (12), in that a polarization rotating angle $\theta_p$ of said Faraday rotator is selected so that a polarization plane of the second laser beam (b) may change by approximately 90° depending upon the magnetized direction of said storage medium, and in that said analyzer (7) selectively transmits a polarization component of the second beam to said photodetection means which is either parallel or vertical to a junction plane of said semiconductor laser (10).

2. An optical information storage apparatus according to claim 1, wherein said Faraday rotator (9) is made of an optically-transparent ferromagnetic material.

3. An optical information storage apparatus according to claim 2, wherein said optically-transparent ferromagnetic material is a member selected from the group consisting of $Y_3Fe_5O_{12}$ and $Gd_2BiFe_5O_{12}$.

4. An optical information storage apparatus according to claim 1, wherein said analyzer (7) is a linear polarizer which has a polarization transmitting plane vertical to the junction plane of said semiconductor laser (10).

5. An optical information storage apparatus according to claim 1, wherein said analyzer (7) is a linear polarizer which has a polarization transmitting plane parallel to the junction plane of said semiconductor laser.

6. An optical information storage apparatus according to claim 1, wherein said analyzer (7) is a polarization prism which separates the parallel and vertical polarization components.

7. An optical information storage apparatus according to claim 6, wherein said photodetection means is composed of first and second photodetectors (41, 42) which receive the parallel and vertical polarization components separated by said polarization prism, respectively, and means (8) for obtaining a difference between outputs of both said photodetectors (41, 42) is further comprised.

8. An optical information storage apparatus according to claim 1, wherein said analyzer is composed of a beam splitter (51) which splits the second laser beam in two, a first linear polarizer (71) which transmits the polarization component parallel to the junction plane of said semiconductor laser, and a second linear polarizer (72) which transmits the polarization component vertical to the junction plane of said semiconductor laser and wherein said photodetection means is composed of first and second photodetectors (41, 42) which receive transmitted lights from one of the split laser through said first linear polarizer and from the other of the split laser through said second linear polarizer, respectively, and means (8) for obtaining a difference between outputs of both said photodetectors (41, 42) is further comprised.

**Patentansprüche**

1. Optisches Datenspeichergerät mit einem Halbleiterlaser (10), der ein senkrecht magnetisierbares Speichermedium (31) mit einem ersten, nach vorn austretenden Laserstrahl (A) bestrahlt, wobei das Speichermedium (31) Daten umfaßt, die aufgrund eine Änderung der Magnetisierung aufgezeichnet sind, und wobei der Halbleiterlaser durch vom Speichermedium reflektiertes Licht eigengekoppelt ist, mit einem Faraday-Rotator (9), der in einem Strahlengang angeordnet ist, auf dem das vom Speichermedium (31) reflektierte Licht zum Halbleiterlaser zurückkehrt, mit einem Fotoempfänger (4), der einen zweiten, rückwärts austretenden Laserstrahl des eigengekoppelten Halbleiterlasers empfängt und in ein elektrisches Signal umsetzt, und mit einem Analysator (7), der zwischen dem Halbleiterlaser (10) und dem Fotoempfänger (4) angeordnet ist; dadurch gekennzeichnet, daß der Halbleiterlaser (10) ein Halbleiterlaser mit vergrabener Heterostruktur ist, wobei eine den ersten Laserstrahl emittierende Fläche (10a) eine Antireflexbeschichtung (12) trägt, daß ein Polarisationsdrehwinkel ($\theta$) des Faraday-Rotators so gewählt ist, daß eine Polarisationsebene des zweiten Laserstrahls (B) um ca 90° in Abhängigkeit von der Magnetisierungsrichtung des Speichermediums änderbar ist, und daß der Analysator (7) selektiv eine Polarisationskomponente des zweiten Strahls zum Fotoempfänger überträgt, die zu einer Übergangsebene des Halbleiterlasers (10) entweder parallel oder vertikal ist.

2. Optisches Datenspeichergerät nach Anspruch 1, wobei der Faraday-Rotator (9) aus einem lichtdurchlässigen ferromagnetischen Werkstoff besteht.

3. Optisches Datenspeichergerät nach Anspruch 2, wobei der lichtdurchlässige ferromagnetische Werkstoff $Y_3Fe_5O_{12}$ oder $Gd_2BiFe_5O_{12}$ ist.

4. Optisches Datenspeichergerät nach Anspruch 1, wobei der Analysator (7) ein Linearpolarisator ist, der eine zur Übergangsebene des Halbleiterlasers (10) senkrechte Polarisationsübertragungsebene hat.

5. Optisches Datenspeichergerät nach Anspruch 1, wobei der Analysator (7) ein Linearpolarisator ist, der eine zur Übergangsebene des Halbleiterlasers parallele Polarisationsübertragungsebene hat.

6. Optisches Datenspeichergerät nach Anspruch 1, wobei der Analysator (7) ein Polarisationsprisma ist, das die parallele und die vertikale Polarisationskomponente voneinander trennt.

7. Optisches Datenspeichergerät nach Anspruch 6, wobei der Fotoempfänger einen ersten und einen zweiten Fotoempfänger (41, 42) umfaßt, die die vom Polarisationsprisma getrennten parallelen bzw. vertikalen Polarisationskomponenten empfangen, und daß ferner ein Glied (8) zum Erhalt einer Differenz zwischen den Ausgängen beider Fotoempfänger (41, 42) vorgesehen ist.

8. Optisches Datenspeichergerät nach Anspruch 1, wobei der Analysator aus einem Strahlteiler (51), der den zweiten Laserstrahl halbiert, einem ersten Linearpolarisator (71), der die zur Übergangsebene des Halbleiterlasers parallele Polarisationskomponente überträgt, und einem zweiten Linearpolarisator (72), der die zur Übergangsebene des Halbleiterlasers vertikale Polarisationskomponente überträgt, besteht, und wobei der Fotoempfänger einen ersten und einen zweiten Fotoempfänger (41, 42) umfaßt, die jeweils Licht vom einen der geteilten Laserstrahlen duch den ersten Linearpolarisator und vom anderen der geteilten Laserstrahlen durch den zweiten Linearpolarisator empfangen, und wobei ein Gleid (8) zum Erhalt einer Differenz zwischen den Ausgängen der Fotoempfänger (41, 42) vorgesehen ist.

**Revendications**

1. Dispositif de stockage optique d'informations comportant un laser à semiconducteurs (10) qui irradie un milieu de mémorisation magnétisable perpendiculairement (31) à l'aide d'un premier faisceau laser (A) sortant vers l'avant, le milieu de mémorisation (31) contenant une information enregistrée sur la base d'une variation de la magnétisation, lequel laser à semiconducteurs est auto-couplé par la lumière réfléchie par le milieu de mémorisation, un rotateur de Faraday (9) qui est disposé dans un trajet optique le long duquel la lumière réfléchie par ledit milieu de mémorisation (31) revient audit laser à semiconducteurs, des moyens (4) de détection photosensible servant à recevoir un second faisceau laser rétrograde délivré par ledit laser semiconducteur auto-couplé et le convertir en un signal électrique, et un analyseur (7) qui est intercalé entre ledit laser à semiconducteurs (10) et lesdits moyens (4) de détection photosensible, caractérisé en ce que ledit laser à semiconducteurs (10) est un laser à semiconducteurs à hétérostructure ensevelie, dans lequel une facette (10a) émettant le premier faisceau laser est munie d'un revêtement antireflet (12), en ce qu'un angle de rotation de polarisation ($\theta_p$) dudit rotateur de Faraday est choisi de sorte qu'un plan de polarisation du second faisceau laser (b) peut varier d'environ 90° en fonction de la direction de magnétisation dudit milieu de mémorisation, et en ce que ledit analyseur (7) envoie de façon sélective auxdits moyens de détection photosensible une composante de polarisation du second faisceau, qui est soit parallèle, soit verticale au plan de la jonction dudit laser à semiconducteurs (10).

2. Dispositif de stockage optique d'informations selon la revendication 1, dans lequel ledit rotateur de Faraday (9) est réalisé en un matériau ferromagnétique transparent du point de vue optique.

3. Dispositif de stockage optique d'informations selon la revendication 2, dans lequel ledit matériau ferromagnétique transparent du point de vue optique est un matériau choisi parmi le groupe incluant $Y_3Fe_5O_{12}$ et $Gd_2BiFe_5O_{12}$.

4. Dispositif de stockage optique d'informations selon la revendication 1, dans lequel ledit analyseur (7) est un polariseur linéaire qui possède un plan de transmission de polarisation, qui est perpendiculaire au plan de la jonction dudit laser à semiconducteurs (10).

5. Dispositif de stockage optique d'informations selon la revendication 1, dans lequel ledit analyseur (7) est un polariseur linéaire, qui possède un plan de transmission de polarisation, qui est parallèle au plan de la jonction dudit laser à semiconducteurs.

6. Dispositif de stockage optique d'informations selon la revendication 1, dans lequel ledit analyseur (7) est un prisme de polarisation qui sépare les composantes de polarisation parallèle et perpendiculaire.

7. Dispositif de stockage optique d'informations selon la revendication 6, dans lequel lesdits moyens de détection photosensible sont constitués par des premier et second photodétecteurs (41, 42) qui reçoivent les composantes de polarisation parallèle et perpendiculaire séparées respectivement par ledit prisme de polarisation, et il est en outre prévu des moyens (8) pour obtenir une différence entre les signaux de sortie desdits deux photodétecteurs (41, 42).

8. Dispositif de stockage optique d'informations selon la revendication 1, dans lequel ledit analyseur est constitué par un diviseur de faisceau (51), qui divise le second faisceau laser en deux, un premier polariseur linéaire (71) qui transmet la composante de polarisation parallèle au plan de la jonction dudit laser à semiconducteurs, et un second polariseur linéaire (72) qui transmet la composante de polarisation perpendiculaire au plan de la jonction dudit laser à semiconducteurs, et dans lequel lesdits moyens de détection photosensible sont constitués par des premier et second photodétecteurs (41, 42), qui reçoivent les lumières émises provenant respectivement d'un faisceau du laser subdivisé, par l'intermédiaire dudit premier polariseur linéaire, et de l'autre faisceau du laser subdivisé, par l'intermédiaire dudit second polariseur linéaire, et qu'il est en outre prévu des moyens (8) pour obtenir une différence entre les signaux de sortie desdits deux photodétecteurs (41, 42).

*FIG. 1*

*FIG. 2(A)*

LASER OUTPUT POWER (mW)

TE

TM

LASER CURRENT (mA)

*FIG. 2(B)*

LASER OUTPUT POWER (mW)

TE

TM

LASER CURRENT (mA)

*FIG. 2(C)*

LASER OUTPUT POWER (mW)

TM

TE

LASER CURRENT (mA)

*FIG. 4*

## FIG. 3

## FIG. 5

DIFFERENTIAL
AMPLIFIER

## FIG. 6